# EUROPEAN PATENT APPLICATION

(11) **EP 2 902 610 A1**
(43) Date of publication of application: **05.08.2015**
(21) Application number: 13841186.3
(22) Date of filing: 25.09.2013
(51) Int. Cl.: F02M 25/08, F02D 45/00

(54) **LEAK DIAGNOSIS DEVICE FOR EVAPORATED FUEL PROCESSING SYSTEM**

(30) Priority: 25.09.2012 JP 2012210955
(71) Applicant: TOYOTA JIDOSHA KABUSHIKI KAISHA, Toyota-shi, Aichi-ken 471-8571 (JP)
(72) Inventor: YAMAMOTO, Satoshi, Toyota-shi, Aichi-ken, 471-8571 (JP); AKAGI, Masaki, Toyota-shi, Aichi-ken, 471-8571 (JP); ASO, Shuichi, Toyota-shi, Aichi-ken, 471-8571 (JP)
(74) Representative: TBK
(86) International application number: PCT/JP2013/005658
(87) International publication number: WO 2014/050085

(57) **Abstract**

It is a task of the invention to provide a leak diagnosis device for an evaporated fuel processing system, which is able to carry out a leak diagnosis irrespective of a temperature inside a fuel tank. A leak diagnosis device that is used in an evaporated fuel processing system including a canister (41) and a purge line (43). The canister (41) is provided inside a fuel tank (31), and adsorbs evaporated fuel that is produced inside the fuel tank (31). The purge line (43) introduces purge gas, including evaporated fuel, from the canister (41) into an intake pipe (23) of an engine (2). An alarm lamp (51) indicating an abnormality is lit on the condition that the width of decrease in the concentration of HC in the purge line (43) in a predetermined period is smaller than a predetermined threshold.

## Description

### TECHNICAL FIELD

The invention relates to a leak diagnosis device for an evaporated fuel processing system.

### BACKGROUND ART

Conventionally, there is known a leak diagnosis device for an evaporated fuel processing system (see, for example, Patent Document 1). The leak diagnosis device includes leak detecting means for detecting a leak of fuel from an outside of a canister into the canister at a submerged portion of the canister. The canister is arranged inside a fuel tank. The leak diagnosis device carries out a leak diagnosis on the basis of whether the leak detecting means has detected a leak of fuel.

The leak detecting means is arranged in a space between a bottom portion inside a canister case and activated carbon, and is separated a predetermined amount upward from the bottom portion inside the canister case so as not to detect fuel that stagnates on the bottom portion inside the canister case when there is no leak of fuel.

If there occurs a leak of fuel at the submerged portion, fuel that stagnates on the bottom portion inside the canister increases, and is detected by the leak detecting means. When the leak detecting means has detected that fuel that stagnates on the bottom portion inside the canister case has reached the predetermined amount, the leak diagnosis device diagnoses that there is a leak of fuel at the submerged portion.

### RELATED ART DOCUMENT

### PATENT DOCUMENT

Patent Document 1: Japanese Patent Application Publication No. 2004-100512 (JP 2004-100512 A)

### SUMMARY OF THE INVENTION

### PROBLEM TO BE SOLVED BY THE INVENTION

In the above-described evaporated fuel processing system, although fuel leaked into the canister case does not vaporize when the temperature inside the fuel tank is relatively low, leaked fuel starts vaporization when the temperature inside the fuel tank usually reaches a predetermined temperature about 20°C. When leaked fuel vaporizes, the amount of fuel that stagnates on the bottom portion inside the canister case decreases.

Therefore, in the existing leak diagnosis device, because the leak detecting means is separated the predetermined amount upward from the bottom portion inside the canister case, the leak detecting means does not submerge in fuel although there is a leak of fuel. As a result, there is a concern that it is not possible to carry out a leak diagnosis.

In this way, there has been an inconvenience that the existing leak diagnosis device may not be able to carry out a leak diagnosis depending on the temperature inside the fuel tank.

The invention is contemplated to solve the above-escribed inconvenience, and it is an object of the invention to provide a leak diagnosis device for an evaporated fuel processing system, which is able to carry out a leak diagnosis irrespective of a temperature inside a fuel tank.

### MEANS FOR SOLVING THE PROBLEM

In order to achieve the above object, a leak diagnosis device for an evaporated fuel processing system according to the invention is a leak diagnosis device that is used for an evaporated fuel processing system including an adsorber and a purge line. The adsorber is provided inside a fuel tank, and adsorbs evaporated fuel that is developed inside the fuel tank. The purge line introduces purge gas, including evaporated fuel, from the adsorber into an intake pipe of an internal combustion engine. An informing device that provides information about an abnormality is activated on the condition that the width of decrease in a concentration of HC in the purge line in a predetermined period is smaller than a predetermined threshold.

With this configuration, the leak diagnosis device for an evaporated fuel processing system according to the invention activates the informing device that provides information about an abnormality on the condition that the width of decrease in the concentration of HC in the purge line is smaller than the predetermined threshold, so it is possible to carry out a leak diagnosis irrespective of a temperature inside the fuel tank.

Preferably, the leak diagnosis device for an evaporated fuel processing system according to the invention is configured to carry out a leak diagnosis as to whether there is a leak in the adsorber on the basis of whether the width of decrease in the concentration of HC in the purge line in the predetermined period is smaller than the predetermined threshold.

With this configuration, the leak diagnosis device for an evaporated fuel processing system according to the invention is able to carry out a leak diagnosis irrespective of the temperature inside the fuel tank by utilizing the fact that the width of decrease in the concentration of HC varies depending on whether there is a leak of fuel.

More preferably, the leak diagnosis device for an evaporated fuel processing system according to the invention is configured to activate the informing device on the condition that an amount of decrease in the concentration of HC in the purge line with a lapse of time is smaller than the amount of decrease in the concentration of HC in the case where there is no leak in the adsorber.

With this configuration, the leak diagnosis device for an evaporated fuel processing system according to the invention is able to carry out a leak diagnosis irrespective of the temperature inside the fuel tank by utilizing a phenomenon that, if a crack, or the like, is developed in the adsorber, fuel outside the adsorber enters into the adsorber via the crack, or the like, and this causes the concentration of HC to be higher than that during normal times.

More preferably, the leak diagnosis device for an evaporated fuel processing system according to the invention is configured to include HC concentration detecting means provided in a purge passage formed inside the purge line so as to communicate an inside of the adsorber with an inside of the intake pipe, the HC concentration detecting means detecting the concentration of HC in the purge gas that is introduced into the intake pipe.

With this configuration, the leak diagnosis device for an evaporated fuel processing system according to the invention is able to accurately acquire a change in the concentration of HC because the leak diagnosis device directly detects the concentration of HC in purge gas.

More preferably, the concentration of HC is detected through estimation of the concentration of HC based on a detected result of an air-fuel ratio sensor provided at an exhaust side of the internal combustion engine.

With this configuration, the leak diagnosis device for an evaporated fuel processing system according to the invention is able to carry out a leak diagnosis without providing an exclusive HC concentration sensor, or the like, because the concentration of HC is detected by estimating the concentration of HC with the use of an existing air-fuel ratio sensor. Thus, it is possible to suppress the number of components, so it is possible to contribute to cost reduction.

More preferably, the evaporated fuel processing system includes an on-off valve provided at an inlet for introducing evaporated fuel inside the fuel tank into the adsorber, and the on-off valve is set to a closed state when the leak diagnosis is carried out.

With this configuration, the leak diagnosis device for an evaporated fuel processing system according to the invention is able to exclude introduction of evaporated fuel, which can be a factor of increasing the concentration of HC other than a leak, because the on-off valve is set to the closed state at the time when a leak diagnosis is carried out, so it is possible to improve the accuracy of a leak diagnosis.

### EFFECT OF THE INVENTION

According to the invention, it is possible to provide a leak diagnosis device for an evaporated fuel processing system, which is able to carry out a leak diagnosis irrespective of a temperature inside a fuel tank.

### BRIEF DESCRIPTION OF THE DRAWINGS

[FIG. 1] FIG. 1 is a schematic configuration view of a relevant portion, including a driving internal combustion engine and a fuel system of the internal combustion engine, in a vehicle on which an evaporated fuel processing system according to an embodiment of the invention is mounted.
[FIG. 2] FIG. 2 is a graph that shows a temporal change in the concentration of HC in a purge passage according to the embodiment of the invention.
[FIG. 3] FIG. 3 is a flowchart that shows a leak diagnosis process that is executed by an ECU according to the embodiment of the invention.

### MODES FOR CARRYING OUT THE INVENTION

Hereinafter, an embodiment of a leak diagnosis device for an evaporated fuel processing system according to the invention will be described with reference to the accompanying drawings.

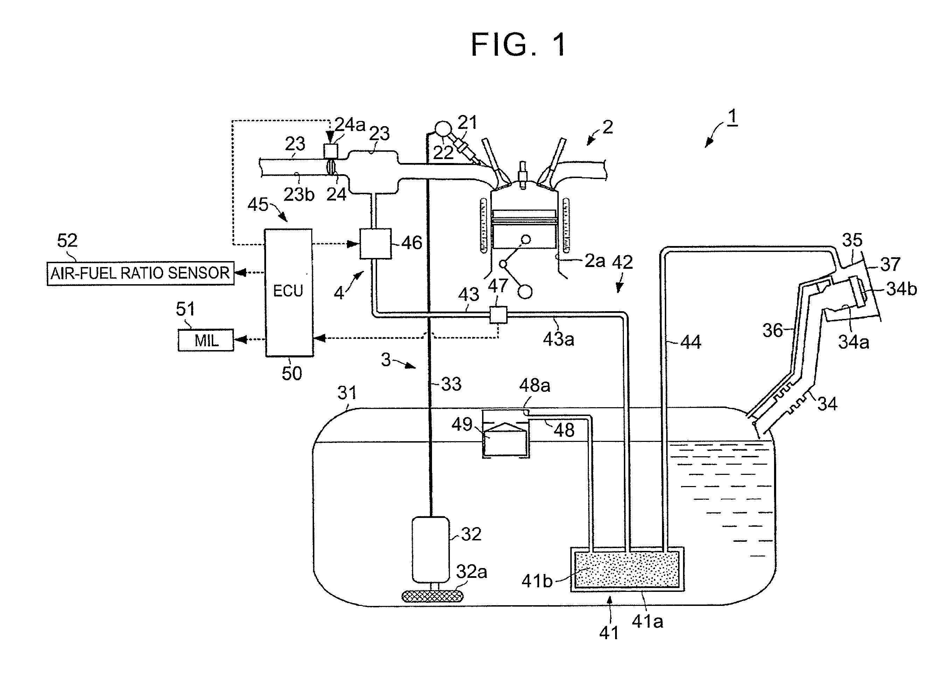

FIG. 1 shows a relevant configuration of a vehicle on which the evaporated fuel processing system according to the embodiment of the invention is mounted, that is, a driving internal combustion engine and the mechanism of a fuel system that supplies fuel or purges fuel for the internal combustion engine. The internal combustion engine according to the present embodiment uses highly-volatile fuel, and is mounted on the vehicle in order to propel the vehicle (not shown).

First, the configuration will be described.

As shown in FIG. 1, the vehicle 1 according to the present embodiment includes an engine 2, a fuel supply mechanism 3, and a fuel purge system 4. The fuel supply mechanism 3 has a fuel tank 31. The fuel purge system 4 constitutes the evaporated fuel processing system.

The engine 2 is formed of a spark-ignition multi-cylinder internal combustion engine, for example, a four-cycle in-line four-cylinder engine.

Injectors 21, each of which serves as a fuel injection valve, are respectively mounted at intake port portions of four cylinders 2a of the engine 2, and the plurality of injectors 21 are connected to a delivery pipe 22. In FIG. 1, only one cylinder 2a out of the four cylinders 2a is shown.

Highly-volatile fuel, such as gasoline, is pressurized to a fuel pressure required of the engine 2, and is supplied from a fuel pump 32 (described later) in the fuel tank 31 to the delivery pipe 22.

An intake pipe 23 is connected to the intake port portions of the engine 2. A surge tank 23a is provided in the intake pipe 23. The surge tank 23a has a predetermined volume and is used to suppress intake pulsation and intake interference.

An intake passage 23b is formed inside the intake pipe 23. A throttle valve 24 is provided in the intake passage 23b. The throttle valve 24 is driven by a throttle actuator 24a so that the opening degree is adjustable. The throttle valve 24 adjusts the intake air amount that is taken into the engine 2 by adjusting the opening degree of the intake passage 23b.

The fuel supply mechanism 3 includes the fuel tank 31, the fuel pump 32 and a fuel supply line 33. The fuel tank 31 is mounted on the vehicle 1. The fuel pump 32 is provided inside the fuel tank 31. The fuel supply line 33 connects the delivery pipe 22 to the fuel pump 32. In FIG. 1, the fuel pump 32 is accommodated inside the fuel tank 31; however, in the invention, the fuel pump 32 does not need to be accommodated inside the fuel tank 31.

The fuel tank 31 is arranged at the lower side of the body of the vehicle 1, and stores fuel that is consumed by the engine 2 so as to be able to supply the fuel. The fuel pump 32 that serves as a feed pump is supported by a support mechanism (not shown) at a predetermined position inside the fuel tank 31.

The fuel pump 32 is of a variable discharge capacity type that is able to change its discharge capacity, such as displacement and discharge pressure. The fuel pump 32 is able to draw fuel inside the fuel tank 31 and pressurize the fuel to a predetermined feed fuel pressure or higher. The fuel pump 32 is, for example, formed of a circumferential flow pump. Although the detailed internal configuration of the fuel pump 32 is not shown, the fuel pump 32 includes a pump driving impeller and a built-in motor that drives the impeller.

The fuel pump 32 includes a fuel filter 32a. The fuel filter 32a is a known one, and filters fuel that is introduced into the fuel pump 32.

The fuel pump 32 is able to change its discharge capacity per unit time by changing at least one of the rotation speed or rotation torque of the pump driving impeller in accordance with the driving voltage and load torque of the built-in motor.

The fuel supply line 33 extends from one end inside the fuel tank 31 to the other end near the engine 2 so as to connect the fuel pump 32 and the delivery pipe 22 to each other.

The fuel supply mechanism 3 may be formed such that the fuel pump 32 variably changes only the displacement and a pressure regulator that controls a feed fuel pressure to a constant value is provided at one end-side portion of the fuel supply line 33. The one end-side portion of the fuel supply line 33 is located inside the fuel tank 31.

On the other hand, a refueling pipe 34 is provided at the fuel tank 31 so as to protrude from the fuel tank 31 laterally or rearward of the vehicle 1. A fuel inlet 34a is formed at the distal end of the refueling pipe 34 in the protruding direction. The fuel inlet 34a is accommodated inside a fuel inlet box 35 provided at the body (not shown) of the vehicle 1.

The refueling pipe 34 includes a circulation line 36 that communicates the upper portion of the fuel tank 31 with the upstream portion inside the refueling pipe 34.

A fuel lid 37 is provided at the fuel inlet box 35. The fuel lid 37 is opened outward at the time when fuel is fed. When fuel is fed, fuel is allowed to be poured into the fuel tank 31 via the fuel inlet 34a by opening the fuel lid 37 and removing a cap 34b detachably attached to the fuel inlet 34a.

The fuel purge system 4 is interposed between the fuel tank 31 and the intake pipe 23, more specifically, between the fuel tank 31 and the surge tank 23a. The fuel purge system 4 is able to release evaporated fuel developed inside the fuel tank 31 to the intake passage 23b at the time of the intake stroke of the engine 2 and cause the released evaporated fuel to combust.

The fuel purge system 4 includes a canister 41, a purge mechanism 42 and a purge control mechanism 45. The canister 41 serves as an adsorber. The purge mechanism 42 desorbs fuel from the canister 41, and releases the fuel into the intake pipe 23. The purge control mechanism 45 controls the operation of the purge mechanism 42. The canister 41 in the present embodiment constitutes an adsorber according to the invention.

In the present embodiment, an in-tank type in which the canister 41 is arranged inside the fuel tank 31 is employed. Thus, for example, during refueling, or the like, it is possible to reduce the temperature of the canister 41 by fed relatively low-temperature fuel, so it is possible to improve the adsorption performance of the canister 41. On the other hand, during purging, the canister 41, submerged in fuel, is heated by surrounding fuel, so it is possible to improve the desorption performance of adsorbed fuel.

The canister 41 contains an adsorbent 41b, such as activated carbon, inside a canister case 41a. The canister 41 is connected to the fuel tank 31 via an evaporation line 48 so as to adsorb evaporated fuel developed inside the fuel tank 31. An adsorbent containing space that constitutes the inside of the canister 41 communicates with an upper space inside the fuel tank 31 via the evaporation line 48 and a gas-liquid separation valve 49.

An inlet 48a is provided at the distal end portion of the evaporation line 48. The inlet 48a is used to introduce evaporated fuel in the fuel tank 31 into the canister 41. The gas-liquid separation valve 49 is provided at the inlet 48a of the evaporation line 48.

When fuel evaporates inside the fuel tank 31 and evaporated fuel accumulates in the upper space inside the fuel tank 31, the canister 41 is able to adsorb evaporated fuel with the use of the adsorbent 41b. When the liquid level of fuel rises or the liquid level of fuel fluctuates inside the fuel tank 31, the gas-liquid separation valve 49 having a check valve function floats and closes the distal end portion of the evaporation line 48.

The purge mechanism 42 includes a purge line 43 and an atmosphere line 44. The purge line 43 communicates the inside of the canister 41 with the internal portion of the surge tank 23a within the intake passage 23b of the intake pipe 23. The atmosphere line 44 opens the inside of the canister 41 to an atmosphere side, for example, an atmospheric pressure space inward of the fuel inlet box 35. A purge passage 43a is formed inside the purge line 43. The purge passage 43a communicates the inside of the canister 41 with the intake passage 23b inside the intake pipe 23. The purge line 43 is a line for introducing purge gas, including evaporated fuel, from the canister 41 into the intake pipe 23 of the engine 2.

When a negative pressure is generated inside the surge tank 23a during operation of the engine 2, the purge mechanism 42 is able to introduce the negative pressure to one end side inside the canister 41 through the purge line 43, and introduce the atmosphere to the other end side inside the canister 41 through the atmosphere line 44.

Thus, the purge mechanism 42 is able to desorb or release fuel, adsorbed by the adsorbent 41b of the canister 41 and held inside the canister 41, from the canister 41 and introduce the fuel into the surge tank 23a.

The purge control mechanism 45 includes a purging vacuum solenoid valve (hereinafter, referred to as purging VSV) 46 and an electronic control unit (hereinafter, referred to as ECU) 50. The ECU 50 controls the purging VSV 46.

The purging VSV 46 is provided in the purge line 43. The purging VSV 46 is able to variably control the amount of fuel that is desorbed from the canister 41 by changing the opening degree of a halfway portion of the purge line 43.

Specifically, the purging VSV 46 is able to change its opening degree through duty control over its exciting current, and is able to introduce fuel desorbed from the canister 41 due to the intake negative pressure in the intake pipe 23 into the surge tank 23a as purge gas together with air at a purge rate according to the duty ratio.

Various sensors and various actuators are connected to the ECU 50. The various sensors include an HC concentration meter 47 (described later) and an air-fuel ratio sensor 52. The various actuators include the fuel pump 32, the throttle actuator 24a, the purging VSV 46, and the like.

An alarm lamp (malfunction indicator lamp (MIL)) 51 is connected to the ECU 50. The alarm lamp 51 serves as an informing device that provides information about an abnormality, such as a failure of the vehicle 1. The alarm lamp (hereinafter, referred to as MIL) 51 is, for example, installed at an instrument panel (not shown) near a driver seat. The ECU 50 is configured to activate or light the MIL 51 at the time when an abnormality, such as a failure, has been detected as a result of a self-failure diagnosis (on board diagnosis (OBD)) including a leak diagnosis process (described later). For example, other than the MIL 51, an in-vehicle display, such as a car navigation system, or a voice unit that provides information by voice, buzzer, or the like, may be used as the above-described informing device. In this case, when the above-described abnormality has been detected, the ECU 50 provides information about the abnormality on the in-vehicle display, such as a car navigation system, or provides information through voice, buzzer sound, or the like, by the voice unit together with the information on the display or separately.

The ECU 5 is able to control the purge rate through duty control over the purging VSV 46 on the basis of various pieces of sensor information.

In this way, the fuel purge system 4 includes the canister 41, the purge mechanism 42 and the purge control mechanism 45. The canister 41 adsorbs evaporated fuel developed in the fuel supply mechanism 3 from the fuel tank 31 to the engine 2, particularly, the fuel tank 31. The purge mechanism 42 introduces purge gas, including fuel and air, into the intake pipe 23 of the engine 2. The purge gas is desorbed from the canister 41 by passing air through the canister 41. The purge control mechanism 45 suppresses fluctuations in air-fuel ratio in the engine 2 by controlling the amount of purge gas that is introduced into the intake pipe 23.

The fuel purge system 4 is able to adsorb evaporated fuel, vaporized in the fuel tank 31, with the canister 41 even in a state where the engine 2 is stopped. The fuel purge system 4 opens the purging VSV 46, for example, in a state where the opening degree of the throttle valve 24 is lower than a predetermined opening degree when the engine 2 is in a predetermined operating state.

Next, the leak diagnosis process that is executed as part of the above-described self-failure diagnosis (OBD) will be described.

The leak diagnosis process according to the present embodiment is executed by the ECU 50, for example, while purging is carried out after completion of refueling. The ECU 50 detects the concentration of HC in the evaporated fuel processing system, and carries out a leak diagnosis for determining whether there is a leak in the canister 41 on the basis of a change in the detected concentration of HC, that is, the width of decrease.

The concentration of HC in the evaporated fuel processing system means the concentration of HC inside the canister case 41a or inside the purge line 43. In the present embodiment, the concentration of HC in purge gas that passes through the purge passage 43a is detected as the concentration of HC in the evaporated fuel system.

Specifically, the HC concentration meter 47 is provided in the purge passage 43a. The HC concentration meter 47 detects the concentration of HC contained in purge gas that passes through the purge passage 43a, that is, the concentration of HC in purge gas that is introduced into the intake pipe 23 as a result of purging. For example, a flame ionization detector, that is, an HC sensor formed of an FID sensor, may be used as the HC concentration meter 47. The HC concentration meter 47 transmits a detected value of the concentration of HC in purge gas to the ECU 50. The HC concentration meter 47 in the present embodiment constitutes HC concentration detecting means according to the invention.

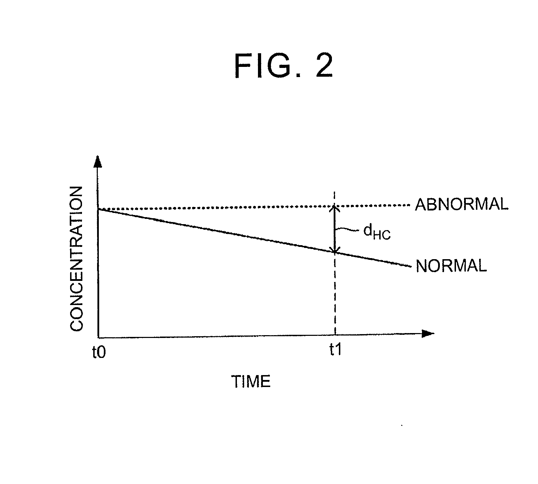

FIG. 2 shows a temporal change in the concentration of HC in purge gas.

As shown in FIG. 2, in a normal state where there is no leak of fuel into the canister 41, when purging is started, the concentration of HC decreases as indicated by the continuous line in the graph with a lapse of time.

In contrast, in an abnormal state where there is a leak of fuel into the canister 41, even when purging is started, the concentration of HC does not decrease with a lapse of time or the width of decrease is slight even when the concentration of HC decreases. Therefore, in the above abnormal state, as indicated by the dashed line in the graph, for example, the concentration of HC at the start of purging or the concentration of HC equivalent to the concentration of HC at the start of purging is kept. This is because, for example, a crack, or the like, is developed in the canister case 41a, fuel leaks through the crack, or the like, into the canister 4, with the result that leaked fuel is constantly mixed with purge gas and is introduced into the purge passage 43a. That is, in the abnormal state where there is a leak of fuel into the canister 41, if purging is carried out, fuel due to the leak is added to purge gas that passes through the purge passage 43a in addition to evaporated fuel adsorbed in the canister 41. Therefore, the concentration of HC does not decrease at all or the width of decrease is slight even when the concentration of HC decreases, and the concentration of HC is kept at a certain level.

Such a leak of fuel is particularly remarkable when the canister 41 is submerged in fuel inside the fuel tank 31. Incidentally, for example, in a situation that the canister 41 is not submerged in fuel because of a reduction in the amount of fuel inside the fuel tank 31, there occurs no leak of fuel. However, even in a situation that the canister 41 is not submerged in fuel, evaporated fuel is introduced into the canister 41 via a crack, or the like, developed in the canister case 41a. Therefore, even in such a situation, there can occur a situation that the concentration of HC does not decrease because of the influence of evaporated fuel that is introduced through the crack, or the like.

In the present embodiment, a leak diagnosis is carried out by the ECU 50 by utilizing the above characteristic of a temporal change in the concentration of HC.

Specifically, the ECU 50 monitors a temporal change in the concentration of HC, detected by the HC concentration meter 47, and determines that it is a normal state where there is no crack, or the like, in the canister case 41a and, therefore, there is no leak of fuel into the canister 41 when the concentration of HC decreases with a lapse of time.

On the other hand, when the concentration of HC does not decrease with a lapse of time or a reduction in the concentration of HC is slight even when the concentration of HC decreases, a crack, or the like, is developed in the canister case 41a, so the ECU 50 determines that it is an abnormal state where there is a leak of fuel into the canister 41.

Specifically, as shown in FIG. 2, the ECU 50 determines that it is an abnormal state where there is a leak of fuel into the canister 41 and lights the MIL 51, for example, on the condition that the width of decrease dHC in the concentration of HC in the purge line 43 in a predetermined period from time t0 to time t1 is smaller than a predetermined threshold. On the other hand, when the width of decrease dHC in the concentration of HC in the purge line 43 in the predetermined period is larger than or equal to the predetermined threshold, the ECU 50 determines that it is a normal state where there is no leak of fuel into the canister 41. In this case, the ECU 50 does not light the MIL 51.

Time t0 shown in FIG. 2 is, for example, purging start time. The above-described predetermined threshold is a value corresponding to the width of decrease dHC in the minimum concentration of HC in the case where there is no leak in the canister 41. The predetermined threshold is experimentally obtained in advance and stored in the ROM of the ECU 50. In FIG. 2, the dashed line that indicates the concentration of HC during abnormal times, that is, in the case where there is a leak, indicates that the width of decrease dHC in the concentration of HC in the predetermined period is 0.

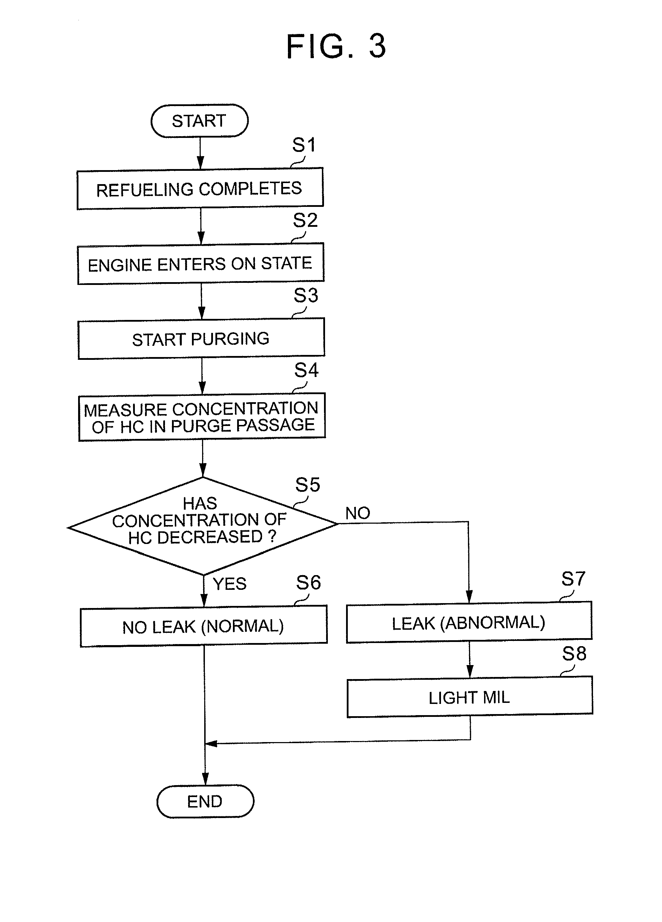

Next, the flow of a series of processes of the leak diagnosis process that is executed by the ECU 50 will be described with reference to FIG. 3. The leak diagnosis process is executed as the OBD on the canister 41.

As shown in FIG. 3, when refueling completes (step S1), and the engine 2 enters an on state, that is, starts up (step S2), the ECU 50 carries out purging (step S3). Specifically, the ECU 50 executes duty control over the purging VSV 46 so that a predetermined purge rate is obtained, and introduces fuel, desorbed from the canister 41 by the intake negative pressure inside the intake pipe 23, into the surge tank 23a as purge gas together with air. At this time, a negative pressure is applied inside the canister case 41a.

Subsequently, the ECU 50 measures the concentration of HC in the purge passage 43a via the HC concentration meter 47 in a state where a negative pressure is applied to the canister 41 as described above, that is, the concentration of HC in purge gas (step S4). Because the ECU 50 needs to measure the width of decrease dHC in the concentration of HC in the purge line 43 in the predetermined period, the ECU 50 measures, for example, the concentration of HC at the start of purging, which is time t0 shown in FIG. 2 as the beginning of the predetermined period, and, for example, the concentration of HC at time t1 shown in FIG. 2 as the end of the predetermined period. Thus, the ECU 50 is able to obtain the width of decrease dHC in the concentration of HC in the purge line 43 in the predetermined period.

After that, on the basis of the width of decrease dHC in the concentration of HC, obtained in the process of step S4, the ECU 50 determines whether the concentration of HC has decreased (step S5). Determination as to whether the concentration of HC has decreased is carried out on the basis of whether the width of decrease dHC in the concentration of HC in the purge line 43 in the predetermined period is smaller than a predetermined threshold. In this way, the ECU 50 carries out a leak diagnosis as to whether there is a leak in the canister 41 on the basis of whether the width of decrease dHC in the concentration of HC in the purge line 43 in the predetermined period is smaller than the predetermined threshold.

When the ECU 50 determines that the concentration of HC has decreased, the ECU 50 determines that it is a normal state where there is no leak of fuel into the canister 41 (step S6), and ends the process.

On the other hand, when the ECU 50 determines that the concentration of HC has not decreased, the ECU 50 determines that it is an abnormal state where there is a leak of fuel into the canister 41 (step S7), and proceeds to step S8.

In step S8, the ECU 50 informs a driver, or the like, of an abnormality due to a leak of fuel into the canister 41 by lighting the MIL 51 (step S8), and ends the process.

As described above, the leak diagnosis device for an evaporated fuel processing system according to the present embodiment carries out a leak diagnosis for determining whether there is a leak in the canister 41 on the basis of a change in the concentration of HC in the evaporated fuel processing system.

For example, when a crack, or the like, is developed in the canister case 41a, fuel that enters into the canister case 41a via the crack influences a change in the concentration of HC. Thus, the leak diagnosis device according to the present embodiment is able to carry out a diagnosis as to whether there is a leak in the canister 41 irrespective of the temperature inside the fuel tank 31 by acquiring such a change in the concentration of HC.

The leak diagnosis device for an evaporated fuel processing system according to the present embodiment carries out a leak diagnosis on the basis of a change in the concentration of HC during purging. When purging is carried out, purge gas is returned into the intake pipe 23 by an intake negative pressure. At this time, when there is no leak in the canister 41, an HC component in the evaporated fuel processing system gradually decreases with a lapse of time, so the concentration of HC tends to decrease.

On the other hand, when there is a leak in the canister 41, the HC component in the evaporated fuel processing system does not decrease at all even when purging is carried out for fuel that leaks into the canister case 41a or a decrease in HC component is slight even when the HC component decreases.

Thus, the leak diagnosis device according to the present embodiment is able to carry out a diagnosis as to whether there is a leak in the canister 41, irrespective of the temperature inside the fuel tank 31 by determining whether such a change in the concentration of HC during purging, especially, the width of decrease in the concentration of HC in the predetermined period, is smaller than the predetermined threshold.

The leak diagnosis device for an evaporated fuel processing system according to the present embodiment diagnoses that there is a leak in the canister 41 on the condition that the width of decrease in the concentration of HC in the predetermined period is smaller than the predetermined threshold.

If a crack, or the like, is developed in the canister 41, fuel outside the canister case 41a enters into the canister case 41a via the crack, or the like, and this causes the concentration of HC to be higher than that during normal times. The leak diagnosis device according to the present embodiment is able to carry out a diagnosis as to whether there is a leak in the canister 41, irrespective of the temperature inside the fuel tank 31 by utilizing such a phenomenon.

In the leak diagnosis device for an evaporated fuel processing system according to the present embodiment, the HC concentration meter 47 is provided in the purge passage 43a, and detects the concentration of HC in purge gas that is introduced into the intake pipe 23 as a result of purging. Thus, because the concentration of HC in purge gas is directly detected, it is possible to accurately acquire a change in the concentration of HC.

In the present embodiment, the concentration of HC is directly measured with the use of the HC concentration meter 47; however, it is not limited to this configuration. For example, the ECU 50 detects the concentration of HC by estimating the concentration of HC on the basis of the detected result of the air-fuel ratio sensor 52 provided at the exhaust side of the engine 2. In such a case, it is not necessary to provide the HC concentration meter 47.

Specifically, the ECU 50 estimates the concentration of HC in purge gas on the basis of a change in the air-fuel ratio that is obtained from the air-fuel ratio sensor 52 when purging is carried out. For example, an oxygen sensor or an A/F sensor or both may be used as the air-fuel ratio sensor 52.

In this case, because the concentration of HC is detected by estimating the concentration of HC with the use of the existing air-fuel ratio sensor 52, it is possible to carry out a leak diagnosis without providing an exclusive HC concentration sensor (HC concentration meter), or the like. Thus, it is possible to suppress the number of components, so it is possible to contribute to cost reduction.

In the present embodiment, it is determined whether it is an abnormal state where there is a leak of fuel into the canister 41 on the basis of the width of decrease dHC in the concentration of HC in the purge line 43 in the predetermined period; however, an embodiment is not limited to this configuration. For example, it may be determined whether it is an abnormal state where there is a leak of fuel into the canister 41 through the following method.

That is, when the amount of decrease in the concentration of HC with a lapse of time is smaller than the amount of decrease in the concentration of HC in the case where there is no leak in the canister 41, the ECU 50 diagnoses that there is a leak in the canister 41. That is, the ECU 50 presets the degree of decrease in the concentration of HC for a reference, determines that the concentration of HC has not decreased when an actual degree of decrease in the concentration of HC is smaller than the reference degree of decrease, and determines that it is an abnormal state where there is a leak of fuel into the canister 41.

On the other hand, the ECU 50 determines that the concentration of HC has decreased when an actual degree of decrease in the concentration of HC is larger than the reference degree of decrease, and determines that it is a normal state where there is no leak of fuel into the canister 41.

The above-described degree of decrease, for example, means the amount of decrease in the concentration of HC per unit time, that is, a slope in FIG. 2. The reference degree of decrease in the concentration of HC is the minimum degree of decrease in the case where there is no leak. The reference degree of decrease is obtained experimentally in advance and stored in the ROM of the ECU 50. The actual degree of decrease to be compared with the reference degree of decrease is also an actual amount of decrease in the concentration of HC per unit time. In FIG. 2, the dashed line that indicates the concentration of HC during abnormal times, that is, in the case where there is a leak, indicates the case where the amount of decrease in the concentration of HC with a lapse of time is zero, that is, the case where the degree of decrease is zero.

When it is determined through the above-described method whether it is an abnormal state where there is a leak of fuel into the canister 41, it differs from the leak diagnosis process shown in FIG. 3 according to the present embodiment in the following point. That is, in step S4, because the ECU 50 needs to acquire a temporal change in the concentration of HC for carrying out a leak diagnosis, the ECU 50 measures the concentration of HC at predetermined time intervals in this step. Thus, the ECU 50 is able to obtain the characteristic of a temporal change in the concentration of HC. After that, in step S5, the ECU 50 determines whether the concentration of HC has decreased with a lapse of time on the basis of the result of the concentration of HC, measured at the predetermined time intervals.

In the present embodiment, the gas-liquid separation valve 49 is a valve having a check valve function of closing in response to an increase in liquid level or fluctuations in liquid level of fuel inside the fuel tank 31. Instead, the gas-liquid separation valve 49 may have an electromagnetic valve function of being able to forcibly enter a valve closed state at any timing in addition to the check valve function. In this case, the gas-liquid separation valve 49 is electrically connected to the ECU 50, and the valve closing operation is controlled by the ECU 50. The gas-liquid separation valve 49 having such the electromagnetic valve function constitutes an on-off valve according to the invention.

When configured as described above, the ECU 50 sets the gas-liquid separation valve 49 to the valve closed state at the time of executing the leak diagnosis process.

In this case, at the time of a leak diagnosis, it is possible to exclude introduction of evaporated fuel that can be a factor of an increase in the concentration of HC, other than a leak, so it is possible to improve the accuracy of a leak diagnosis.

As described above, the leak diagnosis device for an evaporated fuel processing system according to the invention is able to carry out a leak diagnosis irrespective of the temperature inside the fuel tank, and is particularly useful for a leak diagnosis device for an evaporated fuel processing system in which an adsorber is provided inside the fuel tank.

### DESCRIPTION OF REFERENCE NUMERALS

1 vehicle, 2 engine, 3 fuel supply mechanism, 4 fuel purge system, 23 intake pipe, 23a surge tank, 23b intake passage, 31 fuel tank, 41 canister, 41a canister case, 41b adsorbent, 42 purge mechanism, 43 purge line, 44 atmosphere line, 45 purge control mechanism, 46 purging VSV, 47 HC concentration meter, 48 evaporation line, 48a inlet, 49 gas-liquid separation valve, 50 ECU, 51 MIL, 52 air-fuel ratio sensor

## Claims

1. A leak diagnosis device that is used for an evaporated fuel processing system including an adsorber and a purge line, the adsorber being provided inside a fuel tank, the adsorber adsorbing evaporated fuel that is developed inside the fuel tank, the purge line introducing purge gas, including evaporated fuel, from the adsorber into an intake pipe of an internal combustion engine, **characterized in that**:
an informing device that provides information about an abnormality is activated on the condition that the width of decrease in a concentration of HC in the purge line in a predetermined period is smaller than a predetermined threshold.

2. The leak diagnosis device for an evaporated fuel processing system according to claim 1, **characterized in that** a leak diagnosis as to whether there is a leak in the adsorber is carried out on the basis of whether the width of decrease in the concentration of HC in the purge line in the predetermined period is smaller than the predetermined threshold.

3. The leak diagnosis device for an evaporated fuel processing system according to claim 1, **characterized in that** the informing device is activated on the condition that an amount of decrease in the concentration of HC in the purge line with a lapse of time is smaller than the amount of decrease in the concentration of HC in the case where there is no leak in the adsorber.

4. The leak diagnosis device for an evaporated fuel processing system according to any one of claims 1 to 3, **characterized by** comprising HC concentration detecting means provided in a purge passage formed inside the purge line so as to communicate an inside of the adsorber with an inside of the intake pipe, the HC concentration detecting means detecting the concentration of HC in the purge gas that is introduced into the intake pipe.

5. The leak diagnosis device for an evaporated fuel processing system according to any one of claims 1 to 3, **characterized in that** the concentration of HC is detected through estimation of the concentration of HC based on a detected result of an air-fuel ratio sensor provided at an exhaust side of the internal combustion engine.

6. The leak diagnosis device for an evaporated fuel processing system according to any one of claims 2 to 5, **characterized in that**
the evaporated fuel processing system includes an on-off valve provided at an inlet for introducing evaporated fuel inside the fuel tank into the adsorber, and
the on-off valve is set to a closed state when the leak diagnosis is carried out.
